# EUROPEAN PATENT SPECIFICATION

(11) **EP 4 139 566 B1**
(45) Date of publication and mention of the grant of the patent: **11.03.2026**
(21) Application number: 21721454.3
(22) Date of filing: 21.04.2021
(51) Int. Cl.: F02N 11/04

(54) **BELT INTEGRATED STARTER GENERATOR TORQUE CONTROL**
RIEMEN INTEGRIERTE STARTER-GENERATOR-DREHMOMENTREGELUNG
CONTRÔLE DU COUPLE DU GÉNÉRATEUR AVEC DÉMARREUR INTÉGRÉ À LA COURROIE

(30) Priority: 21.04.2020 GB 202005803
(43) Date of publication of application: 01.03.2023
(73) Proprietor: Jaguar Land Rover Limited, Coventry, Warwickshire CV3 4LF (GB)
(72) Inventor: HARRISON, William, Coventry Warwickshire CV3 4LF (GB); SULLIVAN, Matt, Coventry Warwickshire CV3 4LF (GB); ROQUES, Olivier, Coventry Warwickshire CV3 4LF (GB); HANCOCK, Matthew, Coventry Warwickshire CV3 4LF (GB); RIOS, Samuel, Coventry Warwickshire CV3 4LF (GB)
(74) Representative: Jaguar Land Rover Patents Department
(86) International application number: PCT/EP2021/060418
(87) International publication number: WO 2021/214156

(56) References cited:
- GB-A- 2 570 937
- US-A1- 2013 297 111
- US-B1- 10 029 695

## Description

### TECHNICAL FIELD

The present disclosure relates to a control system for controlling torque provided by a belt integrated starter generator. In particular, but not exclusively it relates to a control system for controlling torque provided by a belt integrated starter generator in a hybrid electric vehicle.

### BACKGROUND

A belt integrated starter generator (BISG) is connected to an engine of a vehicle via a tensioner, belt and torsional damper set up.

The torsional damper is designed to suppress or mitigate out frequencies of oscillation which lead to, for example, unwanted noise character, extra fatigue loading on driveline components and transmission of oscillations into the belt system.

The tensioner or tensioner arrangement may be provided to optimize the slack position of the belt for a given torque direction. The tensioner may have a driving position for providing positive torque and an overrun position for providing negative torque.

Along with the tensioner, the front-end auxiliary drive (FEAD) has a substantial amount of physical travel between the BISG producing positive torque and the BISG producing negative torque.

When the BISG changes from applying a positive to a negative torque, or negative to positive torque, this can produce a significant oscillation in the system which can, for example, affect drivability and/or produce undesired noise.

Furthermore, the BISG changing from applying positive to negative torque, or negative to positive torque, can damage the torsional damper if, for example, springs of the torsional damper exceed their maximum travel during a torque direction change.

US10029695 B1 discloses methods and systems for identifying degradation of a belt-driven integrated starter generator (BISG) active belt tensioner coupled to a vehicle engine.

### SUMMARY OF THE INVENTION

It is an aim of the present invention to address one or more of the disadvantages associated with the prior art.

Aspects and embodiments of the invention provide a control system, a system, a vehicle, a method, and computer software, as claimed in the appended claims.

According to an aspect of the invention there is provided a control system for controlling torque provided by a belt integrated starter generator of a vehicle, the control system comprising one or more electronic controllers, the one or more electronic controllers configured to: determine a change in torque to be provided by the belt integrated starter generator according to a torque request; determine that the change in torque will cause the belt integrated starter generator to enter a torque reversal region; and generate and output to the belt integrated starter generator an altered torque request within the torque reversal region, wherein the altered torque request is generated and output to the belt integrated starter generator when the torque request would result in a reduction in the amount of torque provided by the belt integrated starter generator and when the torque request would result in an increase in the amount of torque provided by the belt integrated starter generator.

An advantage provided is that adverse effects on drivability of the vehicle can be avoided and/or undesired noise can be prevented from being produced. Another advantage provided is that damage to a torsional damper provided between the belt integrated starter generator and an engine of the vehicle can be mitigated.

The one or more electronic controllers may collectively comprise: at least one electronic processor having an electrical input for receiving information associated with determining a change in torque to be provided by the belt integrated starter generator and an electrical output associated with outputting an altered torque request; and at least one electronic memory device electrically coupled to the at least one electronic processor and having instructions stored therein; and wherein the at least one electronic processor is configured to access the at least one memory device and execute the instructions thereon so as to cause the control system to determine a change in torque to be provided by the belt integrated starter generator, to determine that the change in torque will cause the belt integrated starter generator to enter a torque reversal region and to generate and output the altered torque request.

The altered torque request may comprise a change or adjustment in the rate of torque delivery in the torque reversal region. The altered torque request may comprise a further change or adjustment in the rate of torque delivery after the belt integrated starter generator has exited the torque reversal region. The altered torque request may comprise a further change or adjustment in the rate of torque delivery after the belt integrated starter generator has gone through torque reversal. The altered torque request may comprise a slowing in the rate of torque delivery in the torque reversal region.

The one or more electronic controllers may be configured to determine that the change in torque will cause the belt integrated starter generator to go through torque reversal and the torque request may be altered when the belt integrated starter generator goes from providing negative torque to providing positive torque and when the belt integrated started generator goes from providing positive torque to negative torque.

The cause of the change in torque to be provided by the belt integrated starter generator may not involve starting an engine of the vehicle.

The altered torque request may comprise a period of time, substantially at the point of torque reversal, in which the torque provided by the belt integrated starter generator is forced substantially to zero. The altered torque request may comprise an increase in the rate of torque delivery from the belt integrated starter generator after the period of time. The altered torque request may comprise a change in the torque request to include torque provision substantially 180 degrees out of phase with oscillation induced in the belt integrated starter generator system by torque reversal.

According to an aspect there is provided a system comprising the control system and the belt integrated starter generator.

According to an aspect of the invention there is provided a vehicle comprising the control system and/or the system.

According to an aspect there is provided a method for controlling torque provided by a belt integrated starter generator of a vehicle, the method comprising: determine a change in torque to be provided by the belt integrated starter generator according to a torque request; determine that the change in torque will cause the belt integrated starter generator to enter a torque reversal region; and generate and output to the belt integrated starter generator an altered torque request within the torque reversal region, wherein the altered torque request is generated and sent to the belt integrated starter generator when the torque request would result in a reduction in the amount of torque provided by the belt integrated starter generator and when the torque request would result in an increase in the amount of torque provided by the belt integrated starter generator.

The altered torque request may comprise a change or adjustment in the rate of torque delivery in the torque reversal region. The altered torque request may comprise a further change or adjustment in the rate of torque delivery after the belt integrated starter generator has exited the torque reversal region. The altered torque request may comprise a further change the rate of torque delivery after the belt integrated starter generator has gone through torque reversal. The altered torque request may comprise a slowing in the rate of torque delivery in the torque reversal region.

The method may comprise determining that the change in torque will cause the belt integrated starter generator to go through torque reversal and the torque request may be altered when the belt integrated starter generator goes from providing negative torque to providing positive torque and when the belt integrated started generator goes from providing positive torque to negative torque.

The cause of the change in torque to be provided by the belt integrated starter generator may not involve starting an engine of the vehicle.

The altered torque request may comprise a period of time, substantially at the point of torque reversal, in which the torque provided by the belt integrated starter generator is forced substantially to zero. The altered torque request may comprise an increase in the rate of torque delivery from the belt integrated starter generator after the period of time. The altered torque request may comprise a change in the torque request to include torque provision substantially 180 degrees out of phase with oscillation induced in the belt integrated starter generator system by torque reversal.

According to an aspect of the invention there is provided a non-transitory computer readable medium comprising computer readable instructions that, when executed by a processor, cause performance of at least one or more methods described herein.

Within the scope of this application it is expressly intended that the various aspects, embodiments, examples and alternatives set out in the preceding paragraphs and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims.

### BRIEF DESCRIPTION OF THE DRAWINGS

One or more embodiments of the invention will now be described, by way of example only, with reference to the accompanying drawings, in which:
FIG. 1 illustrates an example of a vehicle;
FIG. 2A schematically illustrates an example of a control system;
FIG. 2B schematically illustrates an example of a non-transitory computer readable medium;
FIG. 3 schematically illustrates an example of a system;
FIG. 4 illustrates an example of a method; and
FIG. 5 illustrates examples of controlling torque provided by a belt integrated starter generator.

### DETAILED DESCRIPTION

Examples of the present disclosure relate to controlling torque provided by a belt integrated starter generator of a vehicle.

Controlling torque provided by a belt integrated started generator (BISG) can be achieved by altering a torque request for the BISG. In examples, an altered torque request is generated and output to the BISG.

In examples this can be considered altering delivery of torque by the BISG and/or altering control of the BISG and/or altering a torque delivery profile of a BISG.

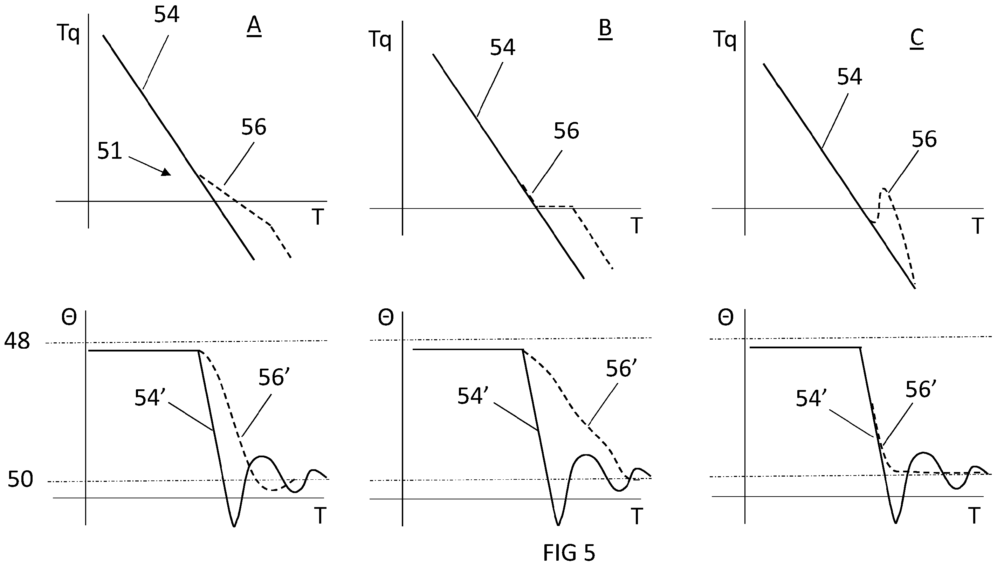

As used herein, a torque delivery profile is intended to mean a function describing or representing a desired delivery of torque as a function of time. For example, a torque delivery profile may be a function describing or representing a desired response in terms of delivery of torque as a function of time following a driver request for torque. See, for example, Fig. 5.

Controlling torque provided by a belt integrated starter generator of a vehicle as described herein is advantageous as, for example, it avoids adverse effects on drivability of the vehicle and/or prevents undesired noise being produced.

Additionally, or alternatively it mitigates damage to a torsional damper provided between the belt integrated starter generator and an engine of the vehicle.

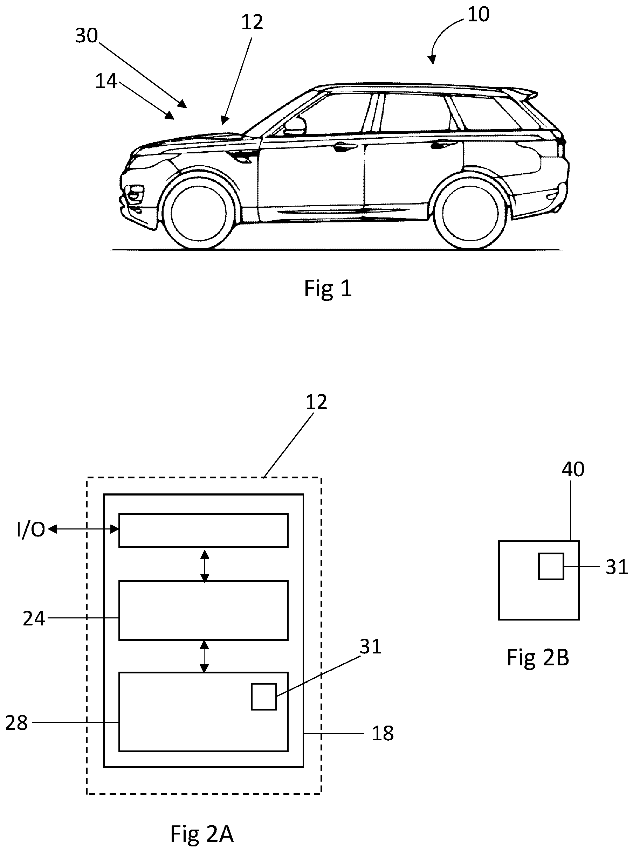

One or more of the features discussed in relation to FIGS. 1, 2A, 2B and 3 can be found in the other FIGS.

FIG. 1 illustrates an example of a vehicle 10 in which embodiments of the invention can be implemented.

In some, but not necessarily all, examples, the vehicle 10 is a passenger vehicle, also referred to as a passenger car or as an automobile. In other examples, embodiments of the invention can be implemented for other applications, such as industrial vehicles.

The vehicle 10 comprises an internal combustion engine 30. The engine 30 may be a reciprocating piston engine. In some examples, the engine 30 may have four or fewer pistons and/or an inline piston configuration. Other configurations of reciprocating piston engines are useful, including those with more than 4 pistons. However, the engine 30 could take other forms in other examples and can, for example, be non-reciprocating.

The vehicle 10 comprises a belt integrated starter generator (BISG) 14 connected to the engine 30 via a tensioner, belt and torsional damper set up. The BISG 14 is configured to transmit propulsive torque and is also configured to act as a generator, for example to provide a regenerative braking function for the vehicle 10. Accordingly, in examples, the BISG 14 is configured to provide positive and negative torque.

The vehicle 10 of FIG. 1 also comprises a control system 12 as described herein. Accordingly, FIG. 1 illustrates an example of a vehicle 10 comprising a control system 12 as described herein.

FIG. 2A illustrates an example of a control system 12. In the illustrated example, the control system 12 is a control system 12 for controlling torque provided by a belt integrated starter generator 14 of a vehicle 10.

In some examples the control system 12 can be considered a control system 12 for controlling a BISG and/or a control system 12 for controlling torque delivery from a BISG and/or a control system 12 for controlling a torque delivery profile of a BISG. In examples, any suitable control system 12 for controlling torque provided by a belt integrated starter generator 14 of a vehicle 10 can be used.

The control system 12 of FIG. 2A comprises an electronic controller 18. In other examples, the control system 12 comprises a plurality of electronic controllers 18 onboard and/or offboard the vehicle 10.

The electronic controller 18 of FIG. 2A comprises at least one electronic processor 24 and at least one electronic memory device 28 electrically coupled to the at least one electronic processor 24 and having instructions 31 (for example a computer program) stored therein, the at least one electronic memory device 28 and the instructions 31 configured to, with the at least one electronic processor 24, cause any one or more of the method or methods herein to be performed.

The electronic controller 18 of FIG. 2A also comprises at least one input (I/O), for receiving signals, and at least one output (I/O), for outputting signals.

The at least one input (I/O) can be considered an electrical input (I/O) for receiving information associated with determining a change in torque to be provided by the belt integrated starter generator 14, for example a torque request signal and/or determining a speed and/or position of the BISG.

In examples, the at least one output (I/O) can be considered an electrical output (I/O) for outputting or transmitting information, for example an altered torque request signal.

Accordingly, FIG. 2A illustrates a control system 12 for controlling torque provided by a belt integrated starter generator 14 of a vehicle 10, the control system 12 comprising one or more electronic controllers 18, the one or more electronic controllers configured to: determine a change in torque to be provided by the belt integrated starter generator 14 according to a torque request 54; determine that the change in torque will cause the belt integrated starter generator 14 to enter a torque reversal region 51; and generate an output to the belt integrated starter generator an altered torque request 56 within the torque reversal region 51, wherein the altered torque request 56 is generated and output to the belt integrated starter generator when the torque request 54 would result in a reduction in the amount of torque provided by the belt integrated starter generator 14 and when the torque request 54 would result in an increase in the amount of torque provided by the belt integrated starter generator 14.

That is, in examples, the altered torque request 56 is generated and output to the belt integrated starter generator 14 both when the belt integrated starter generator 14 is controlled or to be controlled to go from providing positive to negative torque and also from negative to positive torque.

Furthermore, FIG. 2A therefore illustrates a control system 12, wherein the one or more electronic controllers 18 connectively comprise: at least one electronic processor 24 having an electrical input (I/O) for receiving information associated with determining a change in torque to be provided by the belt integrated starter generator 14 and an electrical output (I/O) associated with outputting an altered torque request 56; and at least one electronic memory device 28 electrically coupled to the at least one electronic processor 24 and having instructions 31 stored therein;
and wherein the at least one electronic processor 24 is configured to access the at least one memory device 28 and execute the instructions 31 thereon so as to cause the control system 12 to determine a change in torque to be provided by the belt integrated starter generator 14, to determine that the change in toque will cause the belt integrated starter generator 14 to enter a torque reversal region 51 and to generate and output the altered torque request 56.

In some examples, altering the torque request 54 can be considered altering a torque delivery profile.

In some examples, altering the torque request 54 can be considered altering control of the belt integrated starter generator 14.

In some examples, altering the torque request 54 can be considered altering provision of torque from the belt integrated starter generator.

FIG. 2B illustrates a non-transitory computer readable storage medium 40 comprising the instructions 31 (computer software).

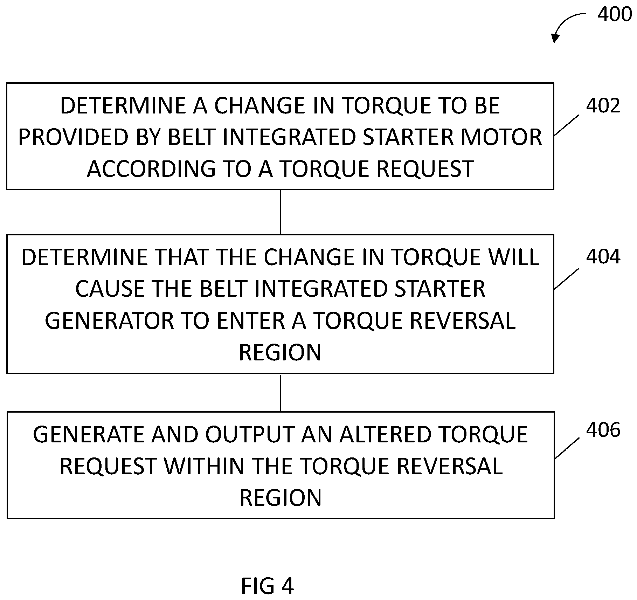

Accordingly, FIG. 2B illustrates a non-transitory computer readable medium 40 comprising computer readable instructions 31 that, when executed by a processor 24, perform the method of FIG. 4 and/or as described herein.

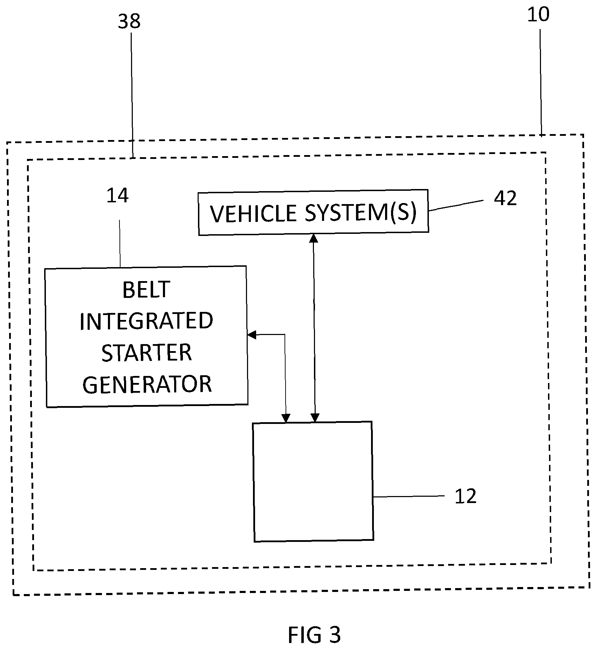

FIG. 3 schematically illustrates an example of a system 38. The system 38 can be considered a vehicle system 38.

In the illustrated example, the system 38 is a system for controlling torque provided by a belt integrated starter generator 14 of a vehicle 10.

In some examples, the system 38 can be considered a system 38 for altering a torque delivery profile of the belt integrated starter generator.

In some examples, the system 38 can be considered a system 38 for altering control of the belt integrated starter generator 14.

In some examples, the system 38 can be considered a system 38 for altering provision of torque from the belt integrated starter generator.

FIG. 3 also illustrates an example of a vehicle 10 comprising a control system 12 as described herein and/or a system 38 as described herein.

In the example of FIG. 3, the system 38 comprises a control system 12 which may be as described in relation to FIG. 2A.

In the example of FIG. 3 the system 38 comprises a belt integrated starter generator 14, one or more vehicle systems 42, which may be considered further vehicle system(s) 42, and a control system 12.

FIG. 3 therefore illustrates a system 38 comprising a control system 12 as described herein and a belt integrated starter generator 14.

In the example of FIG. 3, the control system 12 provides means for controlling operation of the system 38. However, in examples, any suitable means for controlling operation of the system 38 may be used.

As illustrated in the example of FIG. 3, the elements 14 and 42 are operationally coupled to the control system 12 and any number or combination of intervening elements can exist between them (including no intervening elements).

In some examples, the elements 14 and 42 are operationally coupled to each other and/or share one or more components. Additionally, or alternatively, the elements 14 and/or 42 may be operationally coupled to and/or share one or more components with other elements not illustrated in the example of FIG. 3.

The belt integrated starter generator 14 can be any suitable belt integrated starter generator 14 and can have any suitable form.

That is, in examples, the belt integrated starter generator 14 can comprise any suitable components configured to act as a belt integrated starter generator 14.

In examples, the BISG 14 is connected to an engine 30 of the vehicle 10 via a tensioner, belt and torsional damper set up (not illustrated).

In examples any suitable torsional damper can be used. For example, any suitable damper configured to suppress or mitigate a range of frequencies of oscillations which lead to undesired behavior and/or characteristics.

The BISG 14 is configured to provide both positive and negative torque. That is, in examples, the BISG 14 is configured to provide propulsive/tractive torque and also act as a load when, for example, harvesting energy during regenerative braking or vehicle coasting.

Examples of use of the BISG 14 to provide positive torque include starting the engine 30, engine 30 speed control when starting the engine 30 on the move, transmission downshifts, lash control torque fill, balancing engine fuel cut whilst opening clutch in off pedal shutdowns and so on.

Examples of use of the BISG 14 to provide negative torque include torque fill for engine torque overshoots, charging to offset ancillary loads such as air conditioning, radio, heated seats and so on, charging the battery, for engine 30 speed control when starting the engine 30 on the move and so on.

In examples a compensation torque can be referred to as 'torque fill'.

Accordingly, the BISG 14 can be controlled, by the control system 12, to go through torque reversal and switch from providing negative to positive torque or from providing positive to negative torque.

In examples, the control system 12 provides means to control, at least in part, directly or indirectly, operation of the belt integrated starter generator 14. Information may be transmitted between the control system 12 and the belt integrated starter generator 14. For example, control information may be transmitted from the control system 12 to the belt integrated starter generator 14 and/or information from the belt integrated starter generator 14 transmitted to the control system 12.

This is illustrated in the example of FIG. 3 by the double headed arrow linking the belt integrated starter generator 14 and the control system 12.

In examples, the one or more vehicle systems 42 are any suitable vehicle system(s) 42 of the vehicle 10. For example, the one or more vehicle systems 42 may comprise any suitable vehicle system 42 of the vehicle 10 controllable, at least in part, directly or indirectly by the control system 12.

Additionally, or alternatively, the one or more vehicle systems 42 may comprise any suitable vehicle system(s) 42 of the vehicle 10 from which the control system 12 can receive one or more signals, for example, one or signals comprising information.

In examples, the one or more vehicle systems 42 may be considered further vehicle systems comprised in a vehicle system 38.

In some examples, the one or more vehicle systems 42 may be considered to be further vehicle system(s) 42 separate from, but controlled at least in part by, the system 38.

In examples, the one or more vehicle systems 42 comprise any suitable vehicle system(s) 42 from which a torque request 54 for the belt integrated starter generator 14 can be received.

For example, a torque request 54 may come from a physical driver of the vehicle 10, that is a person who interacts with one or more accelerator controls and/or brake controls of the vehicle 10, and/or one more virtual drivers of the vehicle 10.

In examples, virtual drivers can form at least part of any driver assistance systems such as one or more advanced driver assistance systems (ADAS), for example a cruise control system, an autonomous cruise control system, an all-terrain progress control system (ATPC), all-surface progress control (ASPC), park assist and so on. An example of an all-terrain progress control system (ATPC) or all-surface progress control (ASPC) system is described in GB2507622.

In some examples the torque request 54 requires no intervention by a driver of virtual driver of the vehicle 10. For example, a torque request 54 can be received if the high voltage battery of the vehicle 10 state of charge drops too low and charging is required or an engine restart is requested by the vehicle system. In examples, the torque request 54 can come from one or more systems not involved in starting an engine 30 of the vehicle 10.

That is, in examples the cause of the change in torque to be provided by the belt integrated starter generator 14 does not involve starting an engine 30 of the vehicle 10.

In examples, the belt integrated starter generator 14 may be considered to form at least part of one or more vehicle systems 42.

That is, in example, the one more vehicle systems 42 may comprise the belt integrated starter generator 14.

For example, the BISG 14 may be connected to an engine 30 of the vehicle 10.

FIG. 3 also illustrates a vehicle 10 comprising a control system 12 as described herein or a system 38 as described herein.

In examples, the control system 12 provides means to control operation, at least in part, directly or indirectly, of the one or more vehicle systems 42. Information may be transmitted between the control system 12 and the one or more vehicle systems 42. For example, control information may be transmitted from the control system 12 to the one more vehicle systems 42 and/or information from the one or more vehicle systems 42, such as one or more torque requests 54, transmitted to the control system 12.

This is illustrated in the example of FIG. 3 by the double headed arrow linking the one or more vehicle systems 42 and the control system 12.

In the example of FIG. 3, the system 38 is comprised in a vehicle 10.

The system 38 may comprise any number of additional elements not illustrated in the example of FIG. 3. Additionally or alternatively, one or more elements of the system 38 illustrated in the example of FIG. 3 may be integrated and/or combined. For example, the belt integrated starter generator 14 and the one or more vehicle systems 42 may be at least partially combined.

In some examples, one or more of the elements illustrated in the example of FIG. 3 may be omitted from the system 38.

FIG. 4 illustrates an example of a method 400. The method 400 is for controlling torque provided by a belt integrated starter generator 14 of a vehicle 10.

In examples, the vehicle 10 can be a vehicle 10 as illustrated in FIG. 1 and/or 3.

In examples, the method 400 is performed by the control system 12 of FIG. 2A or 3 or a system 38 of FIG. 3.

That is, in examples, the control system 12 described herein comprises means for performing the method 400. However, any suitable means may be used to perform the method 400.

At block 402 a change in torque to be provided by the belt integrated starter generator 14 according to a torque request 54 is determined.

Any suitable method for determining a change in torque to be provided by the belt integrated starter generator 14 according to a torque request 54 can be used.

In some examples, a torque request 54 is received from one or more vehicle systems 42 and the control system 12 determines that a change in torque provided by the belt integrated starter generator 14 is required to fulfill the torque request 54.

In examples, the change in torque to be provided by the belt integrated starter generator 14 can be from providing negative torque to providing positive torque and also from providing positive torque to providing negative torque.

That is, in examples, the torque request 54 can cause a change in torque to be provided by the belt integrated starter generator 14 that causes the belt integrated starter generator to enter into and/or pass through a torque reversal region when going from positive to negative and also from negative to positive torque.

For example, the torque request can cause the BISG 14 to go through torque reversal.

In some examples, the cause of the change in torque to be provided by the belt integrated starter generator 14 does not involve starting an engine 30 of the vehicle 10.

At block 404 it is determined that the change in torque will cause the belt integrated starter generator to enter a torque reversal region 51.

Any suitable method for determining that the change in torque will cause the belt integrated starter generator 14 to enter a torque reversal region 51 can be used.

In examples, it is determined that the change in torque to fulfill the torque request 54 will cause the belt integrated starter generator 14 to change from providing negative torque to positive torque or from providing positive torque to negative torque.

That is, in examples, it is determined that the change in torque will cause the belt integrated starter generator to go through torque reversal.

In examples, the torque reversal region 51 can be considered a region around a zero torque point of the belt integrated starter generator 14. See, for example, FIG. 5. Any suitable torque reversal region 51 can be used.

In examples, the torque reversal region physically refers to the range of BISG produced torque at which the front-end auxiliary drive (FEAD) system are at, or substantially at, their full travel.

The size of the torque reversal region 51 can be dependent on the rate of change of torque. With slow rates of change of torque, the torque reversal region 51 can be a small band of torques, for example ±4Nm around the zero point.

In examples, the torque reversal region can be skewed, for example to the positive side, if there are any losses in the whole FEAD system. For example, +5Nm and -3Nm around the zero point.

In some examples the torque reversal region 51 may be wider in order to account for, and suppress or mitigate, oscillations that are caused when tensing spring elements in the system, such as torsional damper, belt, pulleys and so on.

In examples, the method 400 comprises determining that the change in torque will cause the belt integrated starter generator 14 to go through torque reversal and wherein the torque request 54 is altered when the belt integrated starter generator goes from providing negative torque to providing positive torque and when the belt integrated starter generator 14 goes from providing positive torque to negative torque.

At block 406, an altered torque request signal 56 is generated and output to the BISG within the torque reversal region 51, wherein the altered torque request 56 is generated and sent to the BISG when the torque request 54 would result in a reduction in the amount of torque provided by the belt integrated starter generator 14 and when the torque request 54 would result in an increase in the amount of torque provided by the belt integrated starter generator 14.

In examples, the torque request 54 can be altered in any suitable way. For example, the torque request 54 can be altered in any suitable way to reduce or eliminate oscillations induced in the torsional damper of the belt integrated starter generator and/or the front end accessory drive (FEAD) of the vehicle 10 caused by the belt integrated starter generator 14 entering the torque reversal region and/or going through torque reversal.

In examples, the altered torque request 56 comprises a change in the torque request 56 compared to the torque request 54 initially received.

In examples, altering the torque request 54 can be considered altering a torque delivery profile of the belt integrated starter generator 14 and/or altering torque provision by the belt integrated starter generator 14 and/or altering control of the belt integrated starter generator 14.

In examples, the altered torque request 56 comprises a change or adjustment in the rate of torque delivery in the torque reversal region 51.

The rate of torque delivery can be changed in any suitable way.

In examples, the altered torque request 56 comprises a slowing in the rate of torque delivery in the torque reversal region 51. See, for example, part A of FIG. 5.

In some examples, the altered torque request 56 comprises a further change or adjustment in the rate of torque delivery after the belt integrated starter generator 14 has exited the torque reversal region 51.

In examples, further changing the rate of torque delivery after the belt integrated starter generator 14 has exited the torque reversal region can be done in any suitable way. Thus, in examples, the generation and output of an altered torque request 56 is only performed by the control system 12 in response to a detected or predicted torque reversal region 51 entry and the control system 12 is arranged to, once that torque reversal region 51 has been successfully negotiated by the belt integrated starter generator 14, switch back to outputting the torque request 54. The control system 12 may be arranged to blend between the torque request 54 and altered torque request 56 output to the BISG 14 to further enhance the control of unwanted torsional damper oscillation, for example.

In some examples, the rate of torque delivery is increased after the belt integrated starter generator 14 has exited the torque reversal region 51.

In examples, the altered torque request 56 comprises a further change or adjustment in the rate of torque delivery after the belt integrated starter generator 14 has gone through torque reversal.

That is, in some examples, the altered torque request 56 comprises a further change or adjustment in the rate of torque delivery after the belt integrated starter generator 14 has gone from providing negative to positive torque or from providing positive torque to negative torque.

In examples, further changing the rate of torque delivery after the belt integrated starter generator 14 has gone through torque reversal can be done in any suitable way.

For example, the rate of torque delivery can be increased after the belt integrated starter generator 14 has gone through torque reversal. In examples, the rate of torque delivery is increased up until the point where it matches the original torque request 54.

In some examples, the altered torque request 56 comprises a period of time, substantially at the point of torque reversal, in which the torque provided by the belt integrated starter generator is forced substantially to zero. See, for example, part B of FIG 5.

In examples, any suitable method for forcing the torque provided by the belt integrated starter generator belt integrated starter generator 14 substantially to zero for a period of time substantially at the point of torque reversal can be used.

For example, the control system 12 can hold the altered torque request 56 substantially at zero for the belt integrated starter generator for a predetermined period of time to allow the torsional damper to suppress, mitigate and/or control its own oscillations before torque is reapplied in the other direction.

Any suitable period of time can be used. In examples, the period of time can be determined based on the set up and/or components of the BISG 14 and/or the set up and/or components linking the BISG and an engine 30 of the vehicle.

For example, the period of time can be determined based on the oscillations induced in the BISG and setup used.

For example the period of time can be less than or equal to 0.5 seconds. In examples the period of time can be in the range 0 to 0.5 seconds. In examples the period of time can be in the range 0.1 to 0.4 seconds.

In examples, the altered torque request 56 comprises an increase in the rate of torque delivery from the belt integrated starter generator 14 after the period of time.

In some examples, the altered torque request 56 comprises a change in the torque request 54 to include torque provision substantially 180° out of phase with oscillation induced in the belt integrated starter generator 14 system by torque reversal. See, for example, part C of FIG. 5.

That is, in examples, the altered torque 56 request can comprise a change in the torque request 54 to include torque provision to actively cancel out oscillations induced by the belt integrated starter generator going through torque reversal.

Any suitable method to alter the torque requests to include torque provision substantially 180° out of phase with the induced oscillations can be used.

For example, an internal reference speed can be created based on the expected speed of the BISG without additional acceleration caused by the BISG 14 going through torque reversal, and the components of the BISG 14 moving between the end stops for positive and negative torques. A proportional torque can be applied to the difference between the internal reference speed and the actual speed of the BISG 14 going through torque reversal.

As another example, the torsional damper position can be inferred from the BISG speed and the inferred position used to inform the position of travel between the end stops for positive and negative torques and the level of compensatory torque required.

The function can also be feed forward in dependence on the torque request 54 and rate of change of torque request 54 upon entering the torque reversal region 51.

In examples, the compensatory torque can be adapted in dependence on the vehicle 10 set-up.

A technical effect of the method 400 is that oscillations induced by the belt integrated starter generator 14 going through torque reversal can be reduced or eliminated which can improve drivability, reduce noise produced and/or prevent damage to the torsional damper.

FIG. 5 illustrates examples of controlling torque provided by a belt integrated starter generator 14 of a vehicle 10.

In the example of FIG. 5 three examples, A, B, and C are illustrated. The plots illustrated in FIG. 5 are shown for illustrative purposes and are not intended to be, for example, to scale.

In the upper section of FIG. 5 plots of torque (for example in Nm) provided by the belt integrated starter generator 14 against time (for example in seconds), Tq(Nm) vs T(s), are shown. In examples, these plot can be considered to illustrate torque delivery profiles of the BISG 14.

In the lower sections of FIG. 5 corresponding plots of torsional damper/FEAD position (for example angular measurement θ in degrees) against time (for example in seconds), θ(degrees) vs T(s), are shown.

In part A of FIG. 5 torque provided by the belt integrated starter generator 14 according to an original torque request 54 is shown by a solid line.

It can be seen that in part of A of the example of FIG. 5 the BISG is controlled to go from providing positive torque to negative torque according to the original torque request 54. This causes the BISG to enter a torque reversal region 51 and pass quickly through the zero point causing significant oscillations in the torsional damper position as illustrated in the lower panel of section A by the solid line.

In the lower panel the upper line 48 shows the torsional damper/FEAD position for positive torque and the lower line 50 shows the torsional damper/FEAD position for negative torque.

As noted, the original torque request 54 causes the torsional damper, for example, to oscillate around the negative position following the BISG going through torque reversal leading to undesired noise, drivability issues and/or damage to the damper.

This is illustrated in the lower panel by the corresponding line 54' which shows the corresponding position of the torsional damper/FEAD for the original torque request 54.

In the upper panel of part A of FIG. 5 torque provided by the BISG 14 according to an altered torque request 56 is shown by the dashed line.

As can be seen in the upper panel of part A of FIG. 5, prior to entering the torque reversal region 51 the dashed line 56 is indistinguishable from the solid line 54 and therefore torque provision remains unaltered outside the torque reversal region 51.

However, in the torque reversal region 51 the rate of torque provision is altered to slow down around the zero point as can be seen by the slope of line 56 being shallower than the slope of line 54.

However, once the torque reversal region 51 has been passed through the rate of torque delivery according to line 56 is increased to match that of the original request 54. In this example, after the belt integrated starter generator 14 has successfully negotiated the torque reversal region 51, the control system reverts to sending the belt integrated starter generator 14 the torque request 54 without alteration. As will be understood, this torque request 54, following the torque reversal region 51, has a slight time offset corresponding to the time taken to negotiate the torque reversal region 51. In some examples the control system 12 may further adjust the signal sent to the BISG to compensate for the offset in time and to enhance responsiveness following a torque reversal region 51.

It can be seen in the lower panel of example A of FIG. 5 that the corresponding position of the torsional damper/FEAD, illustrated by the dashed line 56', goes through significantly reduced oscillations when the altered torque request 56 is used.

The plots illustrated in part B of FIG. 5 are similar to those illustrated in part A of FIG. 5.

The torque provision and associated torsional damper position for the original torque request 54 are the same.

However, in the example of part B of FIG. 5 the torque provided by the BISG 14 in accordance with the altered torque request 56 is held at substantially zero for a period of time substantially at the zero point or point of torque reversal.

This can be seen in the upper plot of part B of FIG. 5 by the dashed line which remains approximately zero for a period of time at the point of torque reversal before the rate of torque provision is increased.

It can be seen in the corresponding lower panel, by the corresponding line 56', that this allows oscillations in the damper to dissipate providing a smoother transition through the torque reversal region.

The example of part C of FIG. 5 is also similar and the plots relating to the original torque request 54 remain the same in this example.

However, in the example of part C of FIG. 5 reactive torque is added to the BISG torque request 56 which is 180° out of phase with the induced oscillation. The provision of such torque from the BISG 14 effectively cancels out oscillations as can be seen by the dashed line 56' in the lower plot of part C of FIG. 5.

As used herein "for" should be considered to also include "configured or arranged to". For example, "a control system for" should be considered to also include "a control system configured or arranged to".

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

The blocks illustrated in FIG. 4 may represent steps in a method and/or sections of code in the computer program 31. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Where a structural feature has been described, it may be replaced by means for performing one or more of the functions of the structural feature whether that function or those functions are explicitly or implicitly described.

Features described in the preceding description may be used in combinations other than the combinations explicitly described. Although functions have been described with reference to certain features, those functions may be performable by other features whether described or not.

Although features have been described with reference to certain embodiments, those features may also be present in other embodiments whether described or not.

## Claims

1. A control system (12) for controlling torque provided by a belt integrated starter generator (14) of a vehicle, the control system comprising one or more electronic controllers (18), the one or more electronic controllers configured to:
determine a change in torque to be provided by the belt integrated starter generator according to a torque request;
determine that the change in torque will cause the belt integrated starter generator to enter a torque reversal region; and
generate and output to the belt integrated starter generator an altered torque request within the torque reversal region, wherein the altered torque request is generated and output to the belt integrated starter generator when the torque request would result in a reduction in the amount of torque provided by the belt integrated starter generator and when the torque request would result in an increase in the amount of torque provided by the belt integrated starter generator.

2. The control system of claim 1, wherein the one or more electronic controllers collectively comprise:
at least one electronic processor (24) having an electrical input for receiving information associated with determining a change in torque to be provided by the belt integrated starter generator and an electrical output associated with outputting an altered torque request; and
at least one electronic memory device electrically coupled to the at least one electronic processor and having instructions stored therein;
and wherein the at least one electronic processor is configured to access the at least one memory device and execute the instructions thereon so as to cause the control system to determine a change in torque to be provided by the belt integrated starter generator, to determine that the change in torque will cause the belt integrated starter generator to enter a torque reversal region and to generate and output the altered torque request.

3. The control system of claim 1 or 2, wherein the altered torque request comprises a change or adjustment in the rate of torque delivery in the torque reversal region.

4. The control system of claim 3, wherein the altered torque request comprises a further change or adjustment in the rate of torque delivery after the belt integrated starter generator has exited the torque reversal region.

5. The control system of claim **4,** wherein the altered torque request comprises a further change or adjustment in the rate of torque delivery after the belt integrated starter generator has gone through torque reversal.

6. The control system of claim 3, 4 or 5, wherein the altered torque request comprises a slowing in the rate of torque delivery in the torque reversal region.

7. The control system of any preceding claim, wherein the one or more electronic controllers are configured to determine that the change in torque will cause the belt integrated starter generator to go through torque reversal and wherein the torque request is altered when the belt integrated starter generator goes from providing negative torque to providing positive torque and when the belt integrated started generator goes from providing positive torque to negative torque.

8. The control system of any preceding claim, wherein the cause of the change in torque to be provided by the belt integrated starter generator does not involve starting an engine of the vehicle.

9. The control system of any preceding claim, wherein the altered torque request comprises a period of time, substantially at the point of torque reversal, in which the torque provided by the belt integrated starter generator is forced substantially to zero.

10. The control system of claim 9, wherein the altered torque request comprises an increase in the rate of torque delivery from the belt integrated starter generator after the period of time.

11. The control system of any of claims 1 to 8, wherein the altered torque request comprises a change in the torque request to include torque provision substantially 180 degrees out of phase with oscillation induced in the belt integrated starter generator system by torque reversal.

12. A system comprising the control system of at least one preceding claim and the belt integrated starter generator.

13. A vehicle (10) comprising the control system of at least one of claims 1 to 11 or the system of claim 12.

14. A method for controlling torque provided by a belt integrated starter generator of a vehicle, the method comprising:
determining a change in torque to be provided by the belt integrated starter generator according to a torque request;
determining that the change in torque will cause the belt integrated starter generator to enter a torque reversal region; and
generating and outputting to the belt integrated starter generator an altered torque request within the torque reversal region, wherein the altered torque request is generated and sent to the belt integrated starter generator when the torque request would result in a reduction in the amount of torque provided by the belt integrated starter generator and when the torque request would result in an increase in the amount of torque provided by the belt integrated starter generator.

15. A non-transitory computer readable medium comprising computer readable instructions that, when executed by a processor, cause performance of at least the method of claim 14 14.

## Patentansprüche

1. Steuersystem (12) zum Steuern des von einem riemenintegrierten Startergenerator (14) eines Fahrzeugs bereitgestellten Drehmoments, wobei das Steuersystem eine oder mehrere elektronische Steuerungen (18) umfasst, wobei die eine oder die mehreren elektronischen Steuerungen konfiguriert sind zum:
Bestimmen einer Änderung des vom riemenintegrierten Startergenerator bereitzustellenden Drehmoments nach einer Drehmomentanfrage;
Bestimmen, dass die Änderung des Drehmoments dazu führt, dass der riemenintegrierte Startergenerator in eine Drehmomentumkehrregion eintritt; und
Erzeugen und Ausgeben einer geänderten Drehmomentanfrage innerhalb der Drehmomentumkehrregion an den riemenintegrierten Startergenerator, wobei die geänderte Drehmomentanfrage erzeugt und an den riemenintegrierten Startergenerator ausgegeben wird, wenn die Drehmomentanfrage zu einer Verringerung des von dem riemenintegrierten Startergenerator bereitgestellten Drehmoments führen würde und wenn die Drehmomentanfrage zu einer Erhöhung des von dem riemenintegrierten Startergenerator bereitgestellten Drehmoments führen würde.

2. Steuersystem nach Anspruch 1, wobei die eine oder die mehreren elektronischen Steuerungen zusammengenommen Folgendes umfassen:
mindestens einen elektronischen Prozessor (24), der einen elektrischen Eingang zum Empfangen von Informationen aufweist, die mit dem Bestimmen einer Änderung des vom riemenintegrierten Startergenerator bereitzustellenden Drehmoments verbunden sind, und einen elektrischen Ausgang, der mit der Ausgabe einer geänderten Drehmomentanfrage verbunden ist; und
mindestens eine elektronische Speichervorrichtung, die mit dem mindestens einen elektronischen Prozessor elektrisch gekoppelt ist und darin gespeicherte Anweisungen aufweist;
und wobei der mindestens eine elektronische Prozessor konfiguriert ist, um auf die mindestens eine Speichervorrichtung zuzugreifen und die Anweisungen darauf auszuführen, um das Steuersystem zu veranlassen, eine Änderung des von dem riemenintegrierten Startergenerator bereitzustellenden Drehmoments zu bestimmen, um zu bestimmen, dass die Änderung des Drehmoments den riemenintegrierten Startergenerator veranlasst, in eine Drehmomentumkehrregion einzutreten, und um die geänderte Drehmomentanfrage zu erzeugen und auszugeben.

3. Steuersystem nach Anspruch 1 oder 2, wobei die geänderte Drehmomentanfrage eine Änderung oder Anpassung der Rate der Drehmomentabgabe in der Drehmomentumkehrregion umfasst.

4. Steuersystem nach Anspruch 3, wobei die geänderte Drehmomentanfrage eine weitere Änderung oder Anpassung der Rate der Drehmomentabgabe umfasst, nachdem der riemenintegrierte Startergenerator die Drehmomentumkehrregion verlassen hat.

5. Steuersystem nach Anspruch 4, wobei die geänderte Drehmomentanfrage eine weitere Änderung oder Anpassung der Rate der Drehmomentabgabe umfasst, nachdem der riemenintegrierte Startergenerator eine Drehmomentumkehr durchlaufen hat.

6. Steuersystem nach Anspruch 3, 4 oder 5, wobei die geänderte Drehmomentanfrage eine Verlangsamung der Drehmomentabgabe in der Drehmomentumkehrregion umfasst.

7. Steuersystem nach einem der vorstehenden Ansprüche, wobei die eine oder die mehreren elektronischen Steuerungen konfiguriert sind, um zu bestimmen, dass die Änderung des Drehmoments dazu führt, dass der riemenintegrierte Startergenerator eine Drehmomentumkehr durchläuft, und wobei die Drehmomentanfrage geändert wird, wenn der riemenintegrierte Startergenerator von der Bereitstellung eines negativen Drehmoments zur Bereitstellung eines positiven Drehmoments übergeht und wenn der riemenintegrierte Startergenerator von der Bereitstellung eines positiven Drehmoments zu einem negativen Drehmoment übergeht.

8. Steuersystem nach einem der vorstehenden Ansprüche, wobei die Ursache für die Änderung des vom riemenintegrierten Startergenerator bereitzustellenden Drehmoments nicht das Starten eines Motors des Fahrzeugs ist.

9. Steuersystem nach einem der vorstehenden Ansprüche, wobei die geänderte Drehmomentanfrage eine Zeitspanne umfasst, in der das von dem riemenintegrierten Startergenerator bereitgestellte Drehmoment im Wesentlichen auf Null gezwungen wird.

10. Steuersystem nach Anspruch 9, wobei die geänderte Drehmomentanfrage eine Erhöhung der Drehmomentabgabe des riemenintegrierten Startergenerators nach der Zeitperiode umfasst.

11. Steuersystem nach einem der Ansprüche 1 bis 8, wobei die geänderte Drehmomentanfrage eine Änderung der Drehmomentanfrage umfasst, um die Bereitstellung eines Drehmoments einzuschließen, das im Wesentlichen um 180 Grad phasenverschoben zur Schwingung ist, die in dem riemenintegrierten Startergeneratorsystem durch Drehmomentumkehr erzeugt wird.

12. System, umfassend das Steuersystem nach mindestens einem der vorstehenden Ansprüche und den riemenintegrierten Startergenerator.

13. Fahrzeug (10), umfassend das Steuersystem nach mindestens einem der Ansprüche 1 bis 11 oder das System nach Anspruch 12.

14. Verfahren zum Steuern des von einem riemenintegrierten Startergenerator eines Fahrzeugs bereitgestellten Drehmoments, das Verfahren umfassend:
Bestimmen einer Änderung des vom riemenintegrierten Startergenerator bereitzustellenden Drehmoments nach einer Drehmomentanfrage;
Bestimmen, dass die Änderung des Drehmoments dazu führt, dass der riemenintegrierte Startergenerator in eine Drehmomentumkehrregion eintritt; und
Erzeugen und Ausgeben einer geänderten Drehmomentanfrage innerhalb der Drehmomentumkehrregion an den riemenintegrierten Startergenerator, wobei die geänderte Drehmomentanfrage erzeugt und an den riemenintegrierten Startergenerator gesendet wird, wenn die Drehmomentanfrage zu einer Verringerung des von dem riemenintegrierten Startergenerator bereitgestellten Drehmoments führen würde und wenn die Drehmomentanfrage zu einer Erhöhung des von dem riemenintegrierten Startergenerator bereitgestellten Drehmoments führen würde.

15. Nicht-transitorisches, computerlesbares Medium, das computerlesbare Anweisungen umfasst, die, wenn sie von einem Prozessor ausgeführt werden, mindestens die Durchführung des Verfahrens nach Anspruch 14 bewirken.

## Revendications

1. Système de commande (12) permettant de commander un couple fourni par un générateur-démarreur intégré à une courroie (14) d'un véhicule, le système de commande comprenant un ou plusieurs dispositifs de commande électroniques (18), le ou les dispositifs de commande électroniques étant configurés pour :
déterminer un changement de couple à fournir par le générateur-démarreur intégré à une courroie selon une demande de couple ;
déterminer si le changement de couple amènera le générateur-démarreur intégré à une courroie à entrer dans une région d'inversion de couple ; et
générer et délivrer en sortie au générateur-démarreur intégré à une courroie une demande de couple modifié dans la région d'inversion de couple, dans lequel la demande de couple modifié est générée et délivrée au générateur-démarreur intégré à une courroie si la demande de couple venait à réduire la quantité de couple fournie par le générateur-démarreur intégré à une courroie et si la demande de couple venait à augmenter la quantité de couple fournie par le générateur-démarreur intégré à une courroie.

2. Système de commande selon la revendication 1, dans lequel le ou les dispositifs de commande électroniques comprennent collectivement :
au moins un processeur électronique (24) ayant une entrée électrique pour la réception d'informations associées à la détermination d'un changement de couple à fournir par le générateur-démarreur intégré à une courroie, et une sortie électrique associée au fait de délivrer en sortie une demande de couple modifié ; et
au moins un dispositif de mémoire électronique couplé électriquement à l'au moins un processeur électronique et dans lequel sont stockées des instructions ;
et dans lequel l'au moins un processeur électronique est configuré pour accéder à l'au moins un dispositif de mémoire et exécuter les instructions sur celui-ci de manière à amener le système de commande à déterminer un changement de couple à fournir par le générateur-démarreur intégré à une courroie, à déterminer si le changement de couple amènera le générateur-démarreur intégré à une courroie à entrer dans une région d'inversion de couple et à générer et délivrer en sortie la demande de couple modifié.

3. Système de commande selon la revendication 1 ou 2, dans lequel la demande de couple modifié comprend un changement ou un ajustement du taux de livraison de couple dans la région d'inversion de couple.

4. Système de commande selon la revendication 3, dans lequel la demande de couple modifié comprend un changement ou un ajustement supplémentaire du taux de livraison de couple après que le générateur-démarreur intégré à une courroie a quitté la région d'inversion de couple.

5. Système de commande selon la revendication 4, dans lequel la demande de couple modifié comprend un changement ou un ajustement supplémentaire du taux de livraison de couple après que le générateur-démarreur intégré à une courroie a subi une inversion de couple.

6. Système de commande selon la revendication 3, 4 ou 5, dans lequel la demande de couple modifié comprend un ralentissement du taux de livraison de couple dans la région d'inversion de couple.

7. Système de commande selon l'une quelconque revendication précédente, dans lequel le ou les dispositifs de commande électroniques sont configurés pour déterminer si le changement de couple amènera le générateur-démarreur intégré à une courroie à subir une inversion de couple et dans lequel la demande de couple est modifiée lorsque le générateur-démarreur intégré à une courroie passe de la fourniture d'un couple négatif à la fourniture d'un couple positif et lorsque le générateur-démarreur intégré à une courroie passe de la fourniture d'un couple positif à un couple négatif.

8. Système de commande selon l'une quelconque revendication précédente, dans lequel le fait d'amener le changement de couple à fournir par le générateur-démarreur intégré à une courroie n'implique pas le démarrage d'un moteur du véhicule.

9. Système de commande selon l'une quelconque revendication précédente, dans lequel la demande de couple modifié comprend une période de temps, sensiblement au moment d'une inversion de couple, au cours de laquelle le couple fourni par le générateur-démarreur intégré à une courroie est sensiblement forcé à zéro.

10. Système de commande selon la revendication 9, dans lequel la demande de couple modifié comprend une augmentation du taux de livraison de couple par le générateur-démarreur intégré à une courroie après la période de temps.

11. Système de commande selon l'une quelconque des revendications 1 à 8, dans lequel la demande de couple modifié comprend un changement dans la demande de couple pour inclure une fourniture de couple sensiblement déphasée de 180 degrés avec une oscillation induite dans le système de générateur-démarreur intégré à une courroie par inversion de couple.

12. Système comprenant le système de commande selon au moins une revendication précédente et le générateur-démarreur intégré à une courroie.

13. Véhicule (10) comprenant le système de commande selon au moins l'une des revendications 1 à 11 ou le système selon la revendication 12.

14. Procédé pour la commande de couple fourni par un générateur-démarreur intégré à une courroie d'un véhicule, le procédé comprenant :
la détermination d'un changement de couple à fournir par le générateur-démarreur intégré à une courroie selon une demande de couple ;
le fait de déterminer si le changement de couple amènera le générateur-démarreur intégré à une courroie à entrer dans une région d'inversion de couple ; et
le fait de générer et délivrer en sortie au générateur-démarreur intégré à une courroie une demande de couple modifié dans la région d'inversion de couple, dans lequel la demande de couple modifié est générée et envoyée au générateur-démarreur intégré à une courroie si la demande de couple venait à réduire la quantité de couple fournie par le générateur-démarreur intégré à une courroie et si la demande de couple venait à augmenter la quantité de couple fournie par le générateur-démarreur intégré à une courroie.

15. Support non transitoire lisible par ordinateur comprenant des instructions lisibles par ordinateur qui, lorsqu'elles sont exécutées par un processeur, amènent la réalisation d'au moins le procédé selon la revendication 14.
